# EUROPÄISCHE PATENTSCHRIFT

(11) **EP 4 146 432 B1**
(45) Veröffentlichungstag und Bekanntmachung des Hinweises auf die Patenterteilung: **28.01.2026**
(21) Anmeldenummer: 21726321.9
(22) Anmeldetag: 06.05.2021
(51) Int. Cl.: B23K 26/364, B23K 26/402, B23K 26/70, B29C 59/00, B60R 21/2165, B23K 26/03, B23K 101/00, H04R 23/00

(54) **VERFAHREN ZUR HERSTELLUNG EINER AIRBAG-ABDECKUNG MIT EINER SOLLBRUCHLINIE MIT EINEM DEFINIERTEN AUFREISSWIDERSTAND**
METHOD FOR PRODUCING AN AIRBAG COVER HAVING A PREDETERMINED BREAKING LINE WITH A DEFINED TEAR RESISTANCE
PROCÉDÉ DE RÉALISATION D'UN COUVERCLE D'AIRBAG COMPORTANT UNE LIGNE DE RUPTURE AYANT UNE RÉSISTANCE À LA DÉCHIRURE DÉFINIE

(30) Priorität: 08.05.2020 DE 102020112494
(43) Veröffentlichungstag der Anmeldung: 15.03.2023
(73) Patentinhaber: JENOPTIK Automatisierungstechnik GmbH, 07745 Jena (DE)
(72) Erfinder: WITTENBECHER, Wolfgang, 07768 Gumperda (DE)
(74) Vertreter: Gleim Petri Patent- und Rechtsanwaltspartnerschaft mbB
(86) Internationale Anmeldenummer: PCT/DE2021/100413
(87) Internationale Veröffentlichungsnummer: WO 2021/223813

(56) Entgegenhaltungen:
- WO-A1-2008/000007
- WO-A1-2008/104230
- DE-A1- 3 039 235
- JP-A- H05 227 597
- JP-A- S6 018 100

## Beschreibung

Die Erfindung betrifft ein Verfahren zur Herstellung einer Sollbruchlinie in eine Airbag-Abdeckung, das insbesondere dann vorteilhaft anwendbar ist, wenn die Airbag-Abdeckung aus einem nichttransparentem Material besteht.

Damit sich ein hinter einer Airbag-Abdeckung angeordneter Airbag im Bedarfsfall zuverlässig öffnen kann, ist es bekannt die Airbag-Abdeckung mit einer Sollbruchlinie zu versehen, die im Falle des Öffnens des Airbags aufbricht, so dass der Airbag durch eine dabei freigegebene Öffnung hindurchtreten kann. Bei der Herstellung einer solchen Sollbruchlinie, auch Schwächelinie oder Aufreißlinie genannt, kommt es darauf an, dass die Sollbruchlinie entlang ihrer Längsausdehnung einen über ihre gesamte Länge definierten Aufreißwiderstand aufweist. Dieser kann sowohl über die Länge konstant sein, aber auch einer definierten Änderung unterliegen, indem er z.B. örtlich dort geringer ist, wo das Aufreißen initiiert werden soll. Der Aufreißwiderstand darf nicht zu groß sein, so dass die Sollbruchlinie beim Entfalten des Airbags sicher und gänzlich aufreißt. Gleichzeitig darf er auch nicht zu klein sein, um auszuschließen, dass die Sollbruchlinie bereits durch ungewollte mechanische Einwirkungen von Fahrzeuginsassen aufbricht.

Die meisten Verfahren zur Herstellung einer Sollbruchlinie in einer Airbag-Abdeckung betreffen abtragende Verfahren mit denen Material in Form einer Nut oder einer Reihe von Sacklöchern, bzw. das Material nicht vollständig durchdringenden Schlitzen, abgetragen wird.

Bei einer Airbag-Abdeckung aus einem homogenen Material mit einer homogenen Materialdichte und einer konstanten Dicke der Airbag-Abdeckung ist es ausreichend das Material mit einer konstanten Tiefe abzutragen bzw. zu schneiden, um einen konstanten Aufreißwiderstand zu erhalten. Eine konstante Tiefe des Abtrags ist in diesem Fall gleichbedeutend mit einer konstanten Restwandstärke (Dicke des verbleibenden Materials unterhalb der entstehenden Sacklöcher bzw. Nuten).

Ist die Dicke der Airbag-Abdeckung entlang der gewünschten Sollbruchlinie nicht konstant, dann muss der Abtrag so erfolgen, dass eine konstante Restwandstärke verbleibt. Die Tiefe ist in diesem Fall nicht konstant.

Als Werkzeuge zur Herstellung solcher Sollbruchlinien werden gemäß dem Stand der Technik rein mechanische Schneid- oder Fräswerkzeuge, Ultraschall unterstützte Schneid- oder Fräswerkzeuge und Laser eingesetzt. Es kommen die verschiedensten Messverfahren zur Anwendung, die in Abhängigkeit der Eigenschaften der Airbag-Abdeckung und dem verwendeten Werkzeug mehr oder weniger geeignet sind, um die Tiefe des Abtrags bzw. die Restwandstäke zu erfassen.

In der EP 1 459 943 B1 sind eine Vorrichtung und ein Verfahren offenbart, bei denen eine als Schneidklinge ausgebildete Ultraschall-Sonotrode entlang einer Linie verfahren wird, wobei eine Sollbruchlinie in das Material einer Airbag-Abdeckung eingeschnitten wird. Während des Schneidens wird der Abstand eines mit der Schneidklinge mitgeführten Abstandssensors zu einer das einzuschneidende Material aufnehmenden Schneidgegenplatte gemessen. Es wird die Restwandstärke als Differenz aus dem Abstand von Abstandssensor und Schneidgegenplatte, sowie dem Abstand von Abstandssensor und Grundfläche, bzw. Bodenfläche, errechnet. Die Eindringtiefe der Schneidklinge wird dabei so nachgeregelt, dass die Restwandstärke über die Länge der Sollbruchlinie konstant ist. Das hier verwendete Messverfahren ist an die Verwendung eines mechanischen Werkzeuges gebunden, dessen Eindringtiefe die Tiefe des Schnittes in das Material bestimmt.

Aus der DE 10 2005 040 017 A1 ist ein Verfahren zur Bearbeitung eines Bauteils, insbesondere eines Kraftfahrzeug-Innenverkleidungsbauteils bekannt, bei dem das Bauteil mit Laserstrahlung einer ersten Frequenz bestrahlt wird, wobei das Material des Bauteils die Laserstrahlung absorbiert und im Bauteil eine Schicht vorhanden ist, die bei Auftreffen der Laserstrahlung in einer zur ersten Frequenz unterschiedlichen zweiten Frequenz reemittiert. Wird die reemittierte Strahlung gemessen, dann wurde das Material bis auf diese Schicht abgetragen.

Vorteilhaft kann das Verfahren angewendet werden für die Bearbeitung eines Bauteils, welches eine für die Laserstrahlung beider Frequenzen im Wesentlichen undurchlässige Schicht aufweist. Der Messsensor wird auf derselben Seite des Bauteils angeordnet wie der Laser. Die Genauigkeit der Schnitttiefe wird hier in Abhängigkeit von einer genauen Tiefenlage einer Materialschicht in dem Bauteil erreicht.

In der US 5 883 356 A werden eine Vorrichtung und ein Verfahren zum präzisen Ritzen eines Werkstücks offenbart, bei dem erst an vorgegebenen Punkten entlang der gewünschten Sollbruchlinie die Dicke des Werkstücks bestimmt und anschließend eine Schwächelinie mit einer variierenden Tiefe mittels eines Lasers, korrespondierend zur vorher gemessenen Dicke, erstellt wird. Die Dicke wird ermittelt, indem die gegenüberliegenden Oberflächen, die der Werkstückauflage und die des Werkstücks, gescannt werden. Die Laserleistung sowie die Trajektorie des Laserstrahls werden in Abhängigkeit von der ermittelten Dicke entlang der Sollbruchlinie gesteuert. Dieses Verfahren wird für ein präzises Vorschwächen von Airbag-Abdeckungen verwendet. Dabei wird in Abhängigkeit von der Dicke des Werkstückes entlang der gewünschten Sollbruchlinie wenigstens ein Verfahrensparameter gesteuert, um eine gleichbleibende Abtragstiefe zu erreichen.

Bei allen vorgenannten Verfahren ist die Messgröße die Tiefe des Abtrages bzw. die Restwandstärke.

Die DE 10 2013 202 081 B3 offenbart eine Vorrichtung zum Einbringen von Schnitten in eine flächige Materialbahn und ein Verfahren zum Steuern einer Schneidvorrichtung. Die Vorrichtung beinhaltet eine Schneidvorrichtung zum Einbringen von Schnitten in die Materialbahn, eine Auflagefläche für die flächige Auflage der Materialbahn, eine Messeinrichtung zur Ermittlung einer verbleibenden Restwandstärke längs des Schnittverlaufs, sowie eine Steuer- und Regeleinrichtung, die anhand der ermittelten Messwerte in Abhängigkeit von vorgegebenen Sollwerten entsprechende Stellsignale liefert, die an eine Antriebseinheit übermittelt werden, die anhand der Stellsignale eine Verstellung der Relativlage der Schneidvorrichtung zu der Auflagefläche bewirkt. Die Ermittlung der verbleibenden Restwandstärke wird hier möglich, indem die Schneidvorrichtung und die Auflagefläche aus einem elektrisch leitenden Material bestehen, und eine mit der Schneidvorrichtung und der Auflagefläche verbundene Spannungsquelle vorhanden ist. Die Messeinrichtung misst den zwischen der Schneideinrichtung und der Auflagefläche beim Schneiden fließenden elektrischen Strom, der vom spezifischen Widerstand der sich lokal dazwischen befindenden Materialbahn abhängig ist. Im Unterschied zu den vorgenannten Verfahren ist das Messergebnis dann ein Wert der sich nicht allein in Abhängigkeit von der Restwandstärke ändert, wenn das Material inhomogen ist.

Nachteilig ist allerdings, dass dieses Messverfahren nur mit einem mechanischen Werkzeug umsetzbar ist und das zu bearbeitende Material leitfähig sein muss.

In der EP 0 827 802 B1 ist ein Verfahren zur Herstellung einer Sollbruchlinie beschrieben, bei dem eine Sollbruchlinie in einem Flachmaterial durch ein einseitiges örtliches Abtragen des Flachmaterials mittels gesteuerter gepulster Laserstrahlung erzeugt wird. Dabei wird eine Relativbewegung zwischen der Laserstrahlung und dem Flachmaterial in Richtung der zu erzeugenden Sollbruchlinie vollzogen. Es werden dabei Sacklöcher erzeugt, welche linienförmig aneinandergereiht angeordnet und untereinander jeweils durch einen verbleibenden Steg getrennt sind. Während des Verfahrens wird die durch den Boden eines jeweiligen Sacklochs transmittierte Laserstrahlung detektiert und es wird ein Integralwert über die während der Erzeugung eines Sacklochs detektierten Signale gebildet. Bei Erreichen eines Schwellwertes für den Integralwert, der mit der gewünschten verbleibenden Restwandstärke korreliert, wird die abtragende Laserstrahlung abgeschaltet. Nach einer Relativbewegung über eine vorgegebene Strecke wird die Laserstrahlung wieder eingeschaltet und es wird ein nächstes Sackloch hergestellt. Das hier verwendete Messverfahren ist gebunden an die Verwendung von Laserstrahlung als Werkzeug, sowie die Herstellung einer Sollbruchlinie in Form einer Perforationslinie in einem wenigstens geringfügig transparentem Material. Bei Erreichen des Schwellwertes je Sackloch kann nur dann auf eine gleiche verbleibende Restwandstärke geschlossen werden, wenn das Flachmaterial ein homogenes Material ist. Unterliegt das Flachmaterial entlang der Sollbruchlinie Dichteschwankungen, wird der Schwellwert in einem dichteren Bereich erst bei einer geringeren Restwandstärke erreicht, die jedoch einen vergleichbaren Aufreißwiderstand aufweist wie eine größere Restwandstärke in einem Bereich geringerer Dichte. Dieses Verfahren ist daher auch dann vorteilhaft einsetzbar, wenn das Flachmaterial Dichteschwankungen aufweist.

In der DE 102 54 377 B3 wird ein Verfahren zum Einbringen einer integrierten Sollbruchlinie in ein flächenhaft ausgedehntes Gebilde, insbesondere aus einem inhomogenen Material, wie beispielsweise ein Gewebe, beschrieben. Um hier eine Sollbruchlinie mit einem möglichst homogene Aufreißwiderstand herzustellen wird vorgeschlagen, bei jedem herzustellenden Sackloch entlang der herzustellenden Sollbruchlinie die Laserleistung beginnend von Null bis auf einen Sollwert hochzufahren, wobei der Laser sofort abgeschaltet wird, wenn der Detektor vor Erreichen des Sollwertes ein Signal detektiert, das einen vorgegebenen Schwellwert überschreitet. Damit wird insbesondere vermieden, dass dort wo das Material bereits schwächer ist, als es geschwächt werden soll, nicht noch weiter geschwächt bzw. ganz abgetragen wird.

Die beiden letztgenannten Verfahren sind zum einen auf Laserabtragsverfahren beschränkt und zum anderen muss das Material wenigstens geringfügig für die Laserstrahlung transparent sein, wenn das Material nicht vollständig durchdrungen werden soll.

In der WO 2008/104230 wird ein Verfahren zum Vorschwächen einer Airbag-Abdeckung mit Hilfe von Laserstrahlung offenbart, wobei das Bauteil eine Indikatorschicht aufweist. An dieser Indikatorschicht entsteht Schall, der anschließend durch einen akustischen Sensor detektiert wird, wodurch der Bearbeitungslaser gesteuert werden soll. Nachteilig bei diesem Verfahren ist insbesondere das notwendige Vorhandensein einer Indikatorschicht, wodurch es nicht möglich ist, eine Inhomogenität bei der Restwandstärke oder dem Material bei der Steuerung des Bearbeitungswerkzeuges zu berücksichtigen.

In der US 4 504 727 A ist eine Vorrichtung zum Bohren eines Werkstückes, insbesondere einer mehrschichtigen Leiterplatte beschrieben, das unter Nutzung von photoakustischen Signalen gesteuert wird. Die Vorrichtung beinhaltet wenigstens eine regelbare, abstrahlende Laserquelle. Die unterschiedlichen Schichten haben unterschiedliche photoakustische Eigenschaften und damit jeweils eine charakteristische akustische Signatur die photoakustisch aktiviert wird, indem die Laserquelle auf das Substrat einstrahlt. Das ausgelöste akustische Signal wird detektiert und an ein Kontrollsystem weitergeleitet, welches die Auswertung des detektierten akustischen Signals vornimmt und die Laserparameter entsprechend regelt. Bei der Auswertung wird hier eine sprungartige Signaländerung erfasst, die durch einen am Schichtübergang ausgelösten Schall verursacht wird.

Es ist dem Fachmann bekannt, dass mit der Schallemissionsmessung Werkstoffe wie Metalle, Keramiken, Gläser, Gesteine, Beton, spröde Polymerwerkstoffe, Holz und Verbundwerkstoffe getestet werden können, wobei Schäden an Bauteilen wie Rissbildung, Rissfortschritt, Delamination, Versetzungsbewegung,

Phasenumwandlung und Korrosionsprozesse detektiert werden können. Die jeweiligen Schäden führen zu einer markanten Änderung der von dem Bauteil emittierenden Schallwellen.

Herkömmliche Detektoren für akustische Signale (Mikrofone) messen mittels einer Membran, Piezokristallen oder ähnlichen elektrischen oder mechanischen Hilfsmitteln die bei der Materialbearbeitung entstehenden Schallwellen. Dabei sind immer bewegliche oder auslenkbare Teile in den Messprozess involviert. Die Genauigkeit solcher Messverfahren ist dadurch beschränkt, dass mechanische Systeme Vibrationen ausgesetzt sind und ihre Auslenkung mechanisch limitiert ist. Auch Luftströmungen oder in der Messstruktur entstehende Schallwellen stören die Messung. Bei elektrischen Messverfahren stören elektromagnetische Streufelder die Messung. Dadurch ist es unmöglich für große Druckänderungen einen weiten Frequenzbereich (z.B. 10 Hz - 1 MHz) zuverlässig zu vermessen.

In der US 8 301 029 B2 ist ein akustooptischer Umwandler offenbart, welcher einen Laser, einen optischen Detektor, sowie einen Strahlteiler enthält. Der Strahlteiler teilt den vom Laser emittierten Strahl in einen ersten und einen zweiten Strahl. Der erste Strahl durchläuft eine Weglänge, welche einem akustischen Feld ausgesetzt ist. Der zweite Strahl durchläuft eine akustisch isolierte Weglänge. Die Propagationsgeschwindigkeit des ersten Strahls verändert sich durch die vom akustischen Feld induzierten Druckänderungen und der optische Detektor erzeugt ein elektrisches Signal abhängig von den Änderungen der Propagationsgeschwindigkeit des ersten Strahls.

In einer vorteilhaften Ausführung werden der erste und der zweite Strahl jeweils mehrere Male von zwei planparallelen Spiegeln reflektiert, wobei der der Zwischenraum eines Spiegelpaares einem akustischen Feld ausgesetzt wird, während der Zwischenraum eines anderen Spiegelpaares akustisch isoliert wird.

Aus der US 2015/0139451 A1 ist eine Vorrichtung bekannt, welche ein Mess- und wenigstens ein Referenzinterferometer beinhaltet. Durch den Einsatz von mehreren Referenzinterferometern kann das Signal-Rausch-Verhältnis verbessert werden. Licht aus derselben Quelle wird in die Interferometer eingekoppelt. Das Messinterferometer wird durch Änderungen eines physikalischen Parameters beeinflusst, das wenigstens eine Referenzinterferometer wird von diesen Einflüssen isoliert. Durch die Änderungen des einen oder auch mehrerer physikalischer Parameter ändert sich die Intensität des aus dem Messinterferometer ausgekoppelten Lichts. Die Änderungen werden durch einen Photodetektor gemessen, womit die Änderungen des bzw. der physikalischen Parameter über die Erfassung der Änderung der Intensität des vom Interferometer emittierten Lichts erfasst werden. Die Vorrichtung beinhaltet außerdem einen Signalprozessor, welcher ein Differenzsignal aus den jeweils detektierten Signalen des Mess- und des Referenzinterferometers erzeugt.

Die vorgenannte US 2015/0139451 A1 offenbart auch eine Umsetzung der Vorrichtung als ein optisches Mikrofon. Hierfür ist das Messinterferometer akustisch mit der Umgebung gekoppelt und der physikalische Parameter ist der Luftdruck. Durch lokale Änderungen des Luftdrucks-, bzw. der Luftdichte, verursacht durch ein Schallfeld, ergeben sich lokale Änderungen des Brechungsindex im Interferometer. Dadurch wird die Amplitude der aus dem Interferometer ausgekoppelten Laserstrahlung moduliert. Die Intensität der ausgekoppelten Laserstrahlung ist abhängig von den einlaufenden Schallwellen.

Mithilfe dieses optischen Mikrofons ist es möglich Schallwellen mit einer großen Bandbreite (bis zu 1 MHz in Luft, bis zu 25 MHz in Flüssigkeiten) zu messen. Es können auch verhältnismäßig hohe Frequenzen (>100 kHz) gemessen werden. Herkömmliche Verfahren sind typischerweise auf bis zu ca. 100 kHz Bandbreite begrenzt. Dabei ist das Messverfahren kontaktlos und die Messvorrichtung membranfrei und sehr kompakt. Somit ist es nicht für Störungen durch mechanische Vibrationen anfällig. Ein weiterer Vorteil gegenüber optischen Messverfahren ist, dass elektromagnetische Strahlung aus der Umgebung das detektierte Signal nicht beeinflusst.

In dem Artikel: "Akustische Überwachung für die Lasermaterialbearbeitung", der Fachzeitschrift "Laser", Ausgabe 2/2019 wird ausgeführt, dass durch die Erfassung der Luftschallemission im Frequenzbereich von 10 Hz bis 1 MHz, die nunmehr mit einem "optischen Mikrofon" möglich ist, neue Wege zur Kontrolle von maschinellen Prozessen ermöglicht werden. Bei den hier angegebenen Anwendungsbeispielen für die Prozessüberwachung, nämlich die Detektion von Unregelmäßigkeiten bzw. Defekten auf Oberflächen, die Überwachung von Oberflächenbedingungen (wie z.B. Zinkbeschichtungen) beim Schweißen bzw. Abtragen, die Echtzeit-Erkennung von Rissbildung in Laserschweißprozessen, oder das Feststellen einer Spritzerbildung bei Schweißprozessen werden abrupte Zustandsänderungen erfasst.

In dem vorgenannten Artikel: "Akustische Überwachung für die Lasermaterialbearbeitung" ist auch angegeben, dass das "optische Mikrofon" bei der Laserstrukturierung vielfältig einsetzbar ist. Sowohl die Ermittlung des Fokuspunktes, als auch ein Echtzeit-Parametercheck des Laserwerkzeuges kann vollzogen werden. Daraus können der Durchstoßzeitpunkt des Lasers oder das Ablationsvolumen abgeleitet werden.

Es ist die Aufgabe der Erfindung ein Verfahren zur Herstellung einer Airbag-Abdeckung mit einer Sollbruchlinie mit einem definierten Aufreißwiderstand zu finden, bei dem die Einstellung des Aufreißwiderstandes unabhängig von der Transparenz der Airbag-Abdeckung und unabhängig vom verwendeten Werkzeug steuerbar ist.

Die Aufgabe wird für ein Verfahren zur Herstellung einer Airbag-Abdeckung mit einer Sollbruchlinie, bei der ein Werkzeug entlang einer Linie relativ zu der Airbag-Abdeckung geführt wird, während das Werkzeug an Bearbeitungsorten entlang der Linie Material abträgt erfüllt. Der Materialabtrag wird durch ein Steuersignal gesteuert, das mit einem Referenzsignal, dem ein vorgegebener Aufreißwiderstand zugeordnet ist, verglichen wird. Der Materialabtrag wird am jeweiligen Bearbeitungsort beendet, wenn das Steuersignal dem Referenzsignal bis auf eine vorgegebene Toleranz gleicht, wobei das Steuersignal ein optisches Signal, nämlich ein Interferenzsignal mit einer Schallsignatur, ist.

Erfindungsgemäß wird das Interferenzsignal aus einem Messlaserstrahl generiert, von dem wenigstens ein Anteil entlang einer Strecke durch ein Medium geführt wird, das durch von dem Werkzeug am jeweiligen Bearbeitungsort verursachte Schallwellen beeinflusst wird, sodass eine zur Erzeugung des Interferenzsignals erforderliche Phasenverschiebung induziert wird.

Dabei ist dass die Strecke vorteilhaft in einer festen Relativlage zum jeweiligen Bearbeitungsort angeordnet.

Es ist besonders von Vorteil, wenn die Strecke entlang einer dem Werkzeug abgewandten Seite der Airbag-Abdeckung angeordnet ist.

Das Werkzeug kann ein mechanisches Werkzeug sein ist aber vorteilhaft ein Bearbeitungslaserstrahl, mit zu dem Messlaserstrahl unterschiedlichen Laserparametern.

Vorteilhaft ist der Messlaserstrahl ein aus dem Bearbeitungslaserstrahl ausgekoppelter Strahlanteil.

Die den Bearbeitungsorten zugeordneten Momentanwerte des Steuersignals werden vorteilhaft gespeichert, wenn an den Bearbeitungsorten jeweils die Bearbeitung beendet wird und es wird aus den gespeicherten Momentanwerten ein Qualitätspass für die bearbeitete Airbag-Abdeckung erstellt.

Das erfindungsgemäße Verfahren wird nachfolgend an verschiedenen Ausführungsbeispielen anhand von Zeichnungen näher erläutert.

Hierzu zeigen:
- Fig. 1: einen Vorrichtungsaufbau für ein erstes Ausführungsbeispiel des Verfahrens mit einem Bearbeitungsstrahl als Werkzeug,
- Fig. 2: einen Vorrichtungsaufbau für ein zweites Ausführungsbeispiel des Verfahrens mit einem Bearbeitungsstrahl als Werkzeug,
- Fig. 3: einen Vorrichtungsaufbau für ein drittes Ausführungsbeispiel des Verfahrens mit einem Bearbeitungsstrahl als Werkzeug und einem daraus ausgekoppelten Messlaserstrahl und
- Fig. 4: einen Vorrichtungsaufbau für ein viertes Ausführungsbeispiel des Verfahrens mit einem Fräser als Werkzeug.

Bei allen Ausführungen des Verfahrens wird ein Werkzeug entlang einer gedachten Linie L relativ zu einer Airbag-Abdeckung 2 geführt, wobei durch Materialabtrag an Bearbeitungsorten entlang der Linie L eine Sollbruchlinie 3 mit einer verbleibenden Restwand in der Airbag-Abdeckung 2 erzeugt wird. Dabei wird der Abtrag so gesteuert, dass die verbleibende Restwand entlang der Sollbruchlinie 3 einen im Wesentlichen definierten, bevorzugt konstanten, Aufreißwiderstand aufweist. Während des Abtrags ist der Aufreißwiderstand eine zeitlich und örtlich über die Bearbeitungsorte variierende Größe, die sowohl von der verbleibenden Restwandstärke (Dicke), als auch von der Dichte und der chemischen Zusammensetzung des zu bearbeitenden Materials abhängt. Für eine Airbag-Abdeckung 2 aus einem Material mit einer homogenen Dichteverteilung ist nach erfolgtem Abtrag ein konstanter Aufreißwiderstand dann gegeben, wenn die Restwandstärke an allen Bearbeitungsorten konstant ist. Schwankt die Dichteverteilung des Materials entlang der Linie L, dann wird eine von der Dichteverteilung abhängige Restwandstärke erzeugt, um einen im Wesentlichen gleichen Aufreißwiderstand an den Bearbeitungsorten entlang der Sollbruchlinie 3 zu erzeugen.

Während der Herstellung der Sollbruchlinie 3 wird gleich dem Stand der Technik ein optisches Steuersignal generiert und zur Steuerung des Materialabtrages mit einem Referenzsignal verglichen. Das Steuersignal lässt sich als Folge von Momentanwerten verstehen, die jeweils einem Bearbeitungsort zugeordnet werden. Ein Momentanwert im Sinne dieser Beschreibung stellt entsprechend einen Ausschnitt aus dem Steuersignal dar, der über die Zeit, die der Verweildauer des Werkzeuges S an einem der Bearbeitungsorte zugeordnet wird, diesem Bearbeitungsort zugeordnet wird. Die Bearbeitungsorte können unmittelbar aneinandergrenzen, sodass der Materialabtrag einen Schlitz oder mit Unterbrechungen mehrere Schlitze zum Ergebnis hat. Sie können auch durch regelmäßige Abstände voneinander getrennt sein, sodass durch den Materialabtrag jeweils Sacklöcher entstehen.

Erfindungswesentlich ist, dass es sich bei dem optischen Steuersignal um ein Interferenzsignal handelt, das durch ein akustisches Signal (Schallwellen bzw. ein Schallfeld), welches am Bearbeitungsort durch die Einwirkung des Werkzeuges auf die Airbag-Abdeckung 2 generiert wird, beeinflusst wird, weshalb von einem Interferenzsignal mit einer Schallsignatur gesprochen wird.

Um das Interferenzsignal zu bilden werden aus einem Messlaserstrahl ML miteinander interferierende Teilstrahlen gebildet, die entweder über unterschiedlich lange Strecken von den Schallwellen beeinflusst werden, oder es wird nur ein Anteil des Messstrahls, das heißt einer der beiden Teilstrahlen, vom Schallfeld beeinflusst und der andere Teilstrahl akustisch isoliert geführt. Entscheidend ist, dass die Strecke S, über die wenigstens einer der Teilstrahlen von dem Schallfeld beeinflusst wird, jeweils zu den Bearbeitungsorten eine gleiche Relativlage und auch eine gleiche Länge hat, damit die Beeinflussung unabhängig vom jeweiligen Bearbeitungsort unter denselben Bedingungen stattfindet. Ein für die Messung zuständiger Teil eines zur Durchführung des Verfahrens verwendeten Vorrichtungsaufbau, zu dem eine Messlaserstrahlquelle 4 und ein optischer Detektor 5 gehören, muss je nachdem, ob das Werkzeug oder die Airbag-Abdeckung 2 die zur Bearbeitung erforderliche Bewegung ausführt, synchron mitbewegt werden. Dabei kann die Strecke der Beeinflussung sowohl auf der dem Werkzeug zugewandten Seite oder bevorzugt auf der dem Werkzeug abgewandten Seite der Airbag-Abdeckung 2 angeordnet sein.

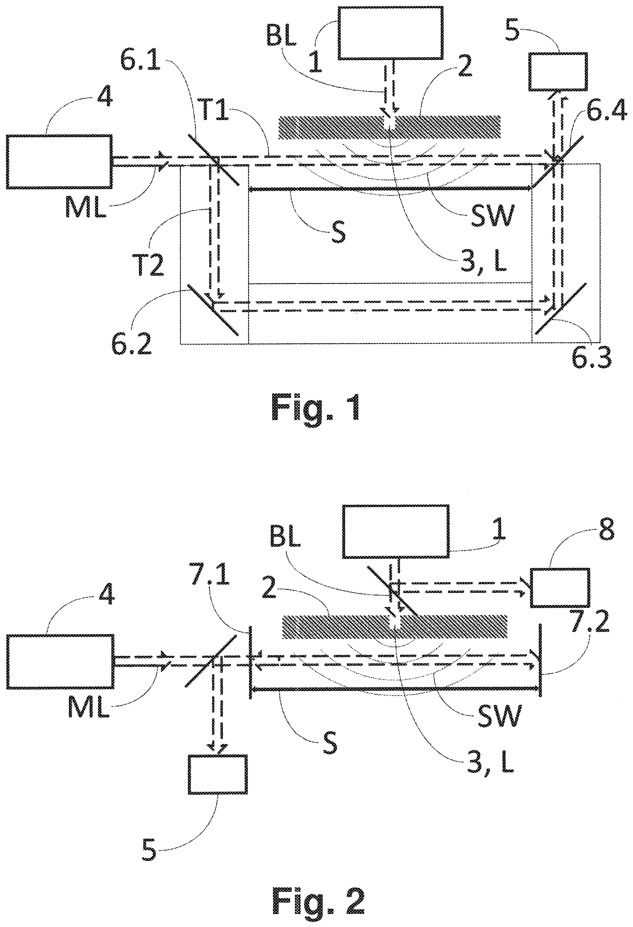

Ein erstes Ausführungsbeispiel für ein erfindungsgemäßes Verfahren wird nachfolgend anhand von **Fig. 1** beschrieben, in der ein hierfür geeigneter Vorrichtungsaufbau als Prinzipskizze dargestellt ist. Gezeigt ist eine Bearbeitungslaserstrahlquelle 1 die einen Bearbeitungslaserstrahl BL entlang einer Linie L, hier senkrecht zur Zeichenebene, relativ zu einer Airbag-Abdeckung 2 führt, wobei eine Sollbruchlinie 3 geschnitten wird. Beim Auftreffen des Bearbeitungslaserstrahls BL werden am jeweiligen Bearbeitungsort Schallwellen SW generiert, deren Eigenschaften charakteristisch sind für die Parameter der unterhalb der Sollbruchlinie 3 noch vorhandenen Restwand und die sich, ein Schallfeld bildend, ausbreiten. Das Schallfeld bildet sich von seiner Quelle, dem Auftreffpunkt des Werkzeuges auf der Airbag-Abdeckung in alle Richtungen aus. Angedeutet ist die Ausbreitung der Schallwellen in den Figuren jeweils in einem für seine Wirkung relevanten Bereich.

Um ein von den generierten Schallwellen beeinflusstes optisches Signal zu erhalten weist der für die Messung relevante Teil des Vorrichtungsaufbaus eine Messlaserstrahlquelle 4, einen optischen Detektor 5 und vier Spiegel 6.1-6.4 auf. Ein von der Messlaserstrahlquelle 4 emittierter Messlaserstrahl ML wird über einen teildurchlässigen ersten Spiegel 6.1 in einen ersten Teilstrahl T1 und einen zweiten Teilstrahl T2 aufgeteilt. Der erste Teilstrahl T1 wird während seiner Propagation über eine Strecke S, das heißt einen Weg mit einer definierten Länge zurücklegend, den am jeweiligen Bearbeitungsort generierten Schallwellen SW ausgesetzt, die zu Druckänderungen in dem Medium entlang der Strecke S, durch die der erste Teilstrahl T1 in einer festen Lage gegenüber dem Bearbeitungsort propagiert, führen. Diese Druckänderungen führen zur Änderung des Brechungsindexes und somit zu einer Änderung der Ausbreitungsgeschwindigkeit des ersten Teilstrahls T1. Die Phase des ersten Teilstrahls T1 wird somit verschoben. Der zweite Teilstrahl T2 wird durch ein Vakuum geführt, völlig unbeeinflusst von den Schallwellen SW, bevor er nach Umlenkung über zwei der Spiegel 6.2, 6.3 über einen teildurchlässigen Spiegel 6.4 mit dem ersten Teilstrahl T1 zur Interferenz gebracht wird. Das dabei entstehende Interferenzsignal wird vom optischen Detektor 5 detektiert. Davon ausgehend, dass die Temperatur und die Wellenlänge des Messlaserstrahls konstant sind, verschiebt sich die Phase des ersten Teilstrahles T1 abhängig von den Druckänderungen durch die Schallwellen und das detektierte Interferenzsignal lässt auf die Druckänderungen und damit die Charakteristik der Schallwellen schließen. Durch die auf der Strecke S einlaufende Schallwellen wird der Brechungsindex des dort befindlichen Mediums moduliert. Die Bildung des Detektionssignals durch Interferenz eines durch die Schallwellen beeinflussten ersten Teilstrahls T1 mit einem unbeeinflussten zweiten Teilstrahl T2 hat den Vorteil, dass Schwankungen der Parameter des Messlaserstrahles ML keinen Einfluss auf das Messergebnis haben. Wichtig für eine objektive und reproduzierbare Messung ist, dass der von dem ersten Teilstrahl T1 durchlaufene geometrische Weg, die Strecke S, über die Dauer der Verfahrensdurchführung eine stets gleiche Länge und gleiche Relativlage zum jeweiligen Bearbeitungsort hat.

Ein zweites Ausführungsbeispiel für ein erfindungsgemäßes Verfahren wird anhand des in **Fig. 2** schematisch dargestellten Vorrichtungsaufbaus erläutert.

Bei diesem Ausführungsbeispiel wird im Unterschied zu dem zuvor beschriebenen Ausführungsbeispiel ein Interferenzsignal erzeugt in dem ein Messlaserstrahl ML in einen Resonator 7 eingekoppelt wird. Das Medium zwischen den Resonatorspiegeln 7.1, 7.2 ist den bei dem Abtragverfahren erzeugten Schallwellen ausgesetzt, wodurch es zu einer Phasenverschiebung bei den im Resonator umlaufenden Wellen kommt. Diese Phasenverschiebung sorgt dafür, dass das aus dem Resonator 7 ausgekoppelte Signal aufgrund der Interferenz des Messlaserstrahls ML im Resonator mit sich selbst in Abhängigkeit von den durch die Schallwellen SW erzeugten Druckdifferenzen moduliert wird.

Vorteilhaft wird hier, um die Schwankungen der Laserparameter aus dem Messergebnis zu eliminieren, ein kleiner Teil des Bearbeitungslaserstrahls ausgekoppelt und durch einen Überwachungsdetektor 8 detektiert, der dazu dient die Laserparameter während des Bearbeitungsprozesses zu überwachen.

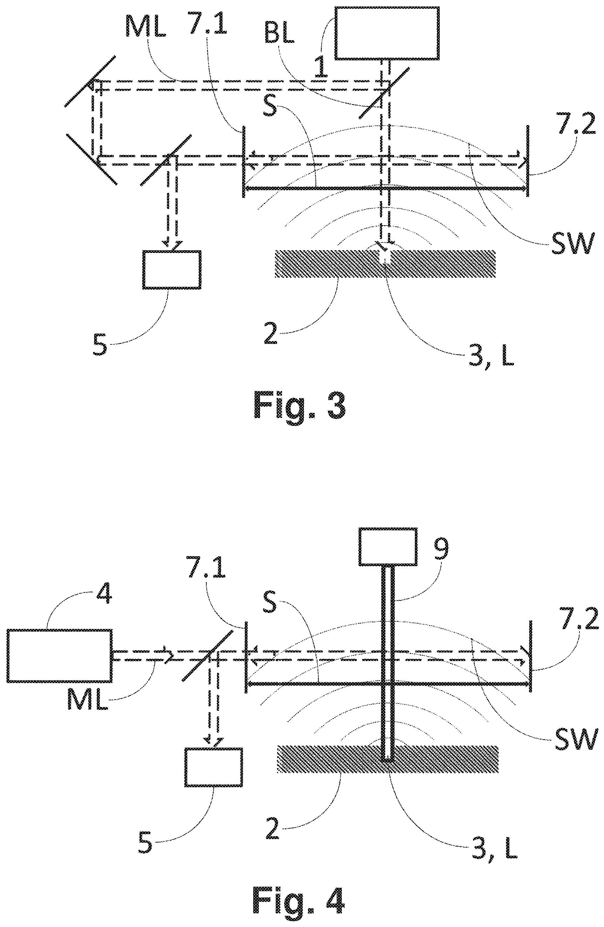

Ein drittes Ausführungsbeispiel für ein erfindungsgemäßes Verfahren unterscheidet sich dadurch, dass der Messlaserstrahl ML ein aus dem Bearbeitungslaserstrahl BL ausgekoppelter Strahlanteil ist. Hierfür wird auf einen Vorrichtungsaufbau, dargestellt in **Fig. 3****,** zurückgegriffen, der in seinem für die Messung relevanten Teil gemäß dem zweiten Ausführungsbeispiel aufgebaut ist.

Gemäß einem vierten Ausführungsbeispiel, bei dem ebenfalls der Messlaserstrahl aus dem Bearbeitungslaserstrahl ausgekoppelt wird, wird die für die Interferenz erforderliche Phasenverschiebung gemäß dem zweiten Ausführungsbeispiel realisiert.

Weitere Ausführungsbeispiele unterscheiden sich zu den vorgenannten durch ein anderes Werkzeug. Anstelle eines Bearbeitungslaserstrahls wird, wie in **Fig. 4** dargestellt, ein mechanisches Werkzeug 9 verwendet. Dabei kann es sich beispielsweise um ein Schälmesser oder einen Fräser handeln. Das Steuersignal wird analog zu den zuvor beschriebenen Ausführungsbeispielen gewonnen.

Die Strecke S ist gemäß den **Fig. 1 und 2** auf der dem Werkzeug abgewandten Seite und gemäß den **Fig. 3 und 4** auf der dem Werkzeug zugewandten Seite angeordnet. Die Anordnung der Strecke S ist für die Ausführungsbeispiele und damit für die Figuren austauschbar.

Bei der Anordnung der Strecke S auf der dem Werkzeug abgewandten Seite der Airbag-Abdeckung ist es vorteilhaft, dass eine Beeinflussung der Schallwellen durch das Werkzeug ausgeschlossen wird und die generierten Schallwellen nur die Restwand durchlaufen, das heißt, dass das an die Restwand angrenzende, die Sollbruchlinie 3 begrenzende Material auf die Schallwellen zumindest einen geringeren Einfluss auf deren Ausbreitung und damit deren Parameter haben. Die Parameter der Schallwellen sind deutlicher von den Parametern der Restwand geprägt als die Schallwellen auf der dem Werkzeug zugewandten Seite. Die Anordnung der Strecke S auf der dem Werkzeug abgewandten Seite ist besonders vorteilhaft, wenn die Airbag-Abdeckung aus einem schichtmaterial besteht und die Restwand nur von einem Teil einer Schicht gebildet wird.

In allen Ausführungsbeispielen wird zur Steuerung des Materialabtrages an den jeweiligen Bearbeitungsorten das detektierte Interferenzsignal mit einem Referenzsignal verglichen, das charakteristisch für den definierten Aufreißwiderstand der Airbag-Abdeckung 2 entlang der Sollbruchlinie 3 ist.

Stimmt das detektierte Interferenzsignal bezogen auf den jeweiligen Bearbeitungsort mit dem Referenzsignal, bezogen auf den gleichen Bearbeitungsort, innerhalb einer vorgegebenen Toleranz überein, wird die Abtragung am jeweiligen Bearbeitungsort gestoppt. Das Referenzsignal wurde zuvor gewonnen indem eine Airbag-Abdeckung in gleicherweise bearbeitet wurde wie gemäß dem Verfahren, und mit einer nachträglichen Messung, insbesondere mit einer zerstörenden Messung, bestätigt wurde, dass die hergestellte Sollbruchlinie den erwarteten Aufreißwiderstand aufweist. Die Momentanwerte des Steuersignals, die an den einzelnen Bearbeitungsorten zur Beendigung der Bearbeitung geführt haben, werden dann der Zeit zugeordnet als Referenzsignal gespeichert.

### Bezugszeichenliste

- 1: Bearbeitungslaserstrahlquelle
- 2: Airbag-Abdeckung
- 3: Sollbruchlinie
- 4: Messlaserstrahlquelle
- 5 7.1,: optischer Detektor
- 6.1-6.4: Spiegel
- 7: Resonator
- 7.2: Resonatorspiegel
- 8: Überwachungsdetektor
- 9: mechanisches Werkzeug

- L: Linie
- SW: Schallwellen
- S: Strecke
- ML: Messlaserstrahl
- T1: erster Teilstrahl
- T2: zweiter Teilstrahl
- BL: Bearbeitungslaserstrahl

## Patentansprüche

1. Verfahren zur Herstellung einer Airbag-Abdeckung (2) mit einer Sollbruchlinie (3), bei der ein Werkzeug entlang einer Linie (L) relativ zu der Airbag-Abdeckung (2) geführt wird, während das Werkzeug an Bearbeitungsorten entlang der Linie (L) Material abträgt, wobei der Materialabtrag durch ein Steuersignal gesteuert wird, das mit einem Referenzsignal, dem ein vorgegebener Aufreißwiderstand zugeordnet ist, verglichen wird, und der Materialabtrag am jeweiligen Bearbeitungsort beendet wird, wenn das Steuersignal dem Referenzsignal bis auf eine vorgegebene Toleranz gleicht, wobei das Steuersignal ein optisches Signal ist, **dadurch gekennzeichnet,**
**dass** das optische Signal ein Interferenzsignal mit einer Schallsignatur ist, wobei das Interferenzsignal aus einem Messlaserstrahl (ML) generiert wird, von dem wenigstens ein Anteil entlang einer Strecke (S) durch ein Medium geführt wird, das durch von dem Werkzeug am jeweiligen Bearbeitungsort verursachte Schallwellen (SW) beeinflusst wird, sodass eine zur Erzeugung des Interferenzsignals erforderliche Phasenverschiebung induziert wird.

2. Verfahren nach Anspruch 1, **dadurch gekennzeichnet,**
**dass** die Strecke (S) in einer festen Relativlage zum jeweiligen Bearbeitungsort angeordnet ist.

3. Verfahren nach Anspruch 1, **dadurch gekennzeichnet,**
**dass** die Strecke (S) entlang einer dem Werkzeug abgewandten Seite der Airbag-Abdeckung (2) angeordnet ist.

4. Verfahren nach Anspruch 1, **dadurch gekennzeichnet,**
**dass** das Werkzeug ein Bearbeitungslaserstrahl (BL) ist, mit zu dem Messlaserstrahl (ML) unterschiedlichen Laserparametern.

5. Verfahren nach Anspruch 1, **dadurch gekennzeichnet,**
**dass** das Werkzeug ein Bearbeitungslaserstrahl (BL) ist und der Messlaserstrahl (ML) ein aus dem Bearbeitungslaserstrahl (BL) ausgekoppelter Strahlanteil ist.

6. Verfahren nach einem der vorhergehenden Ansprüche, **dadurch gekennzeichnet, dass** den Bearbeitungsorten zugeordnete Momentanwerte des Steuersignals gespeichert werden, wenn an den Bearbeitungsorten jeweils die Bearbeitung beendet wird und aus den gespeicherten Momentanwerten ein Qualitätspass für die bearbeitete Airbag-Abdeckung (2) erstellt wird.

## Claims

1. A method for producing an airbag cover (2) having a predetermined breaking line (3), in which a tool is guided along a line (L) relative to the airbag cover (2), while the tool removes material at machining locations along the line (L), wherein the material removal is controlled by a control signal which is compared with a reference signal to which a predetermined tear resistance is assigned, and the material removal at the respective machining location is terminated when the control signal equals the reference signal up to a predetermined tolerance, wherein the control signal is an optical signal, **characterized in that**
the optical signal is an interference signal with an acoustic signature, wherein the interference signal is generated from a measuring laser beam (ML), at least a portion of which is guided along a path (S) through a medium which is influenced by the sound waves (SW) caused by the tool at the respective machining location, so that a phase shift required to generate the interference signal is induced.

2. The method according to claim 1, **characterized in that**
the path (S) is arranged in a fixed position relative to the respective machining location.

3. The method according to claim 1, **characterized in that**
the path (S) is arranged along a side of the airbag cover (2) facing away from the tool.

4. The method according to claim 1, **characterized in that**
the tool is a machining laser beam (BL) with laser parameters differing from those of the measuring laser beam (ML).

5. The method according to claim 1, **characterized in that**
that the tool is a machining laser beam (BL) and the measuring laser beam (ML) is a beam portion coupled out of the machining laser beam (BL).

6. The method according to any one of the preceding claims, **characterized in that** instantaneous values of the control signal assigned to the machining locations are stored when machining is completed at each of the machining locations, and a quality certificate for the machined airbag cover (2) is created from the stored instantaneous values.

## Revendications

1. Procédé de réalisation d'un couvercle d'airbag (2) comportant une ligne de rupture prédéterminée (3), dans lequel un outil est guidé le long d'une ligne (L) par rapport au couvercle d'airbag (2), tandis que l'outil enlève de la matière à des lieux d'usinage le long de la ligne (L), l'enlèvement de matière étant commandé par un signal de commande qui est comparé à un signal de référence auquel est associée une résistance à l'arrachement prédéfinie, et l'enlèvement de matière est arrêté au lieu d'usinage respectif lorsque le signal de commande est égal au signal de référence à une tolérance prédéfinie près, le signal de commande étant un signal optique, **caractérisé**
**en ce que** le signal optique est un signal d'interférence avec une signature sonore, le signal d'interférence étant généré à partir d'un faisceau laser de mesure (ML), dont au moins une partie est guidée le long d'un trajet (S) à travers un milieu qui est influencé par les ondes sonores (SW) provoquées par l'outil au lieu d'usinage respectif, de sorte qu'un déphasage nécessaire à la génération du signal d'interférence est induit.

2. Procédé selon la revendication 1, **caractérisé**
**en ce que** le trajet (S) est disposé dans une position relative fixe par rapport au lieu d'usinage respectif.

3. Procédé selon la revendication 1, **caractérisé**
**en ce que** le trajet (S) est disposé le long d'un côté du couvercle d'airbag (2) opposé à l'outil.

4. Procédé selon la revendication 1, **caractérisé**
**en ce que** l'outil est un faisceau laser d'usinage (BL) dont les paramètres laser diffèrent de ceux du faisceau laser de mesure (ML).

5. Procédé selon la revendication 1, **caractérisé**
**en ce que** l'outil est un faisceau laser d'usinage (BL) et que le faisceau laser de mesure (ML) est une portion de faisceau découplée du faisceau laser d'usinage (BL).

6. Procédé selon l'une quelconque des revendications précédentes, **caractérisé en ce que** les valeurs instantanées du signal de commande associées aux lieux d'usinage sont enregistrées lorsque l'usinage est terminé à chacun des lieux d'usinage et qu'un certificat de qualité est établi à partir des valeurs instantanées enregistrées pour le couvercle d'airbag (2) usiné.
